# EUROPÄISCHE PATENTANMELDUNG

(11) **EP 0 724 836 A2**
(43) Veröffentlichungstag der Anmeldung: **07.08.1996**
(21) Anmeldenummer: 95118676.6
(22) Anmeldetag: 28.11.1995
(51) Int. Cl.: A23G 1/10, A23G 1/20

(54) **Vorrichtung und Verfahren zur Aufbereitung von Schokoladenmasse mit in der Masse eingeschlossenen Gasvolumina**

(30) Priorität: 13.01.1995 DE 19500921
(71) Anmelder: Gebr. Bindler Maschinenfabrik GmbH & Co. KG, D-51702 Bergneustadt (DE)
(72) Erfinder: Bindler, Uwe, Dipl.-Ing., D-51702 Bergneustadt (DE); Müller, Markus, Dr.-Ing., D-51580 Reichshof-Heidelberg (DE); Rieck, Heike, Dipl.-Ing., D-51503 Rösrath-Hoffnungsthal (DE)
(74) Vertreter: Cohausz & Florack

(57) **Zusammenfassung**

Die Erfindung betrifft eine Vorrichtung bzw. ein Verfahren zur Aufbereitung von Schokoladenmasse mit in der Masse eingeschlossenen Gasvolumina bestehend aus einem Masseversorgungssystem (1, 2, 3, 4) zur Bereitstellung von temperierter Schokoladenmasse, einem gasbeaufschlagten Druckbehälter (5), welcher einen Einlaß (E) für die Masse, Mittel zum Vermischen des Gases mit der Schokoladenmasse und einen Auslaß (A) zum Abzug der mit Gas angereicherten Schokoladenmasse unter Gasdruck aufweist, und einer dem Druckbehälter (5) nachgeordneten Gießeinrichtung (7). Zur Verbesserung der Effektivität des Gaseintrags in die Schokoladenmasse ist erfindungsgemäß vorgesehen, daß der Druckbehälter (5) die Form eines horizontalen Zylinders aufweist, entlang dessen Mittelachse sich die Rührmittel (6) erstrecken, und der nur in einem verhältnismäßig geringen Grad mit Schokoladenmasse gefüllt ist.

## Beschreibung

Die Erfindung betrifft eine Vorrichtung und ein Verfahren zur Aufbereitung von Schokoladenmasse mit in der Masse eingeschlossenen Gasvolumina, bei dem Schokoladenmasse mit bestimmten Eigenschaften (Zusammensetzung, Viskosität, Temperierzustand) bereitgestellt, einem gasbeaufschlagten Druckbehälter zugefördert und in diesem einer Rührbewegung unterzogen wird, durch welche das Gas mit der Schokoladenmasse vermischt und teilweise von ihr umhüllt wird. Bei dem sich anschließenden Gießvorgang unter Normaldruck expandieren die Gasteilchen in der Schokoladenmasse durch die bestehende Druckdifferenz und bilden die erwünschte poröse Struktur in der Schokoladenmasse.

Schokolade, die nach dem oben genannten Verfahren aufbereitet wird, bezeichnet man auch als "Luftschokolade". Die Besonderheit von Artikeln aus Luftschokolade besteht im Unterschied zu sonstigen Schokoladenartikeln darin, daß sie eingeschlossene Gasvolumina aufweisen, die eine starke Porösität und damit eine gegenüber massiven Artikeln geringere Dichte des Schokoladenartikels verursachen.

In einer aus der Praxis bekannten Vorrichtung ist der Druckbehälter als vertikaler Behälter ausgebildet, an dessen Oberseite die temperierte Schokoladenmasse zugeführt wird. Ebenfalls an der Oberseite des Behälters befindet sich der Einlaßstutzen für das von der Schokoladenmasse zu umgebende Gas, welches ein Druckpolster im oberen Bereich des zu ca. 50% mit Schokoladenmasse gefüllten Druckbehälters bildet. In diesem Druckbehälter befinden sich ein oder mehrere Rührwerke, die ein Vermischen von Gas und Masse und den Gaseintrag in die Schokoladenmasse realisieren. An der Unterseite des Druckbehälters wird die so behandelte Schokoladenmasse abgezogen und weitertransportiert. Die Weiterverarbeitung erfolgt mittels einer Gießmaschine, an der die austretende Schokoladenmasse dem Umgebungsdruck unterworfen ist, so daß sich das in der Masse befindliche Gas ausdehnt und die gewünschten Gasvolumina in der Schokoladenmasse bildet. Bei der bekannten Vorrichtung hat sich gezeigt, daß die der Gießmaschine zugeführte gasbehandelte Schokoladenmasse nur mit hohen Verweilzeiten im Druckbehälter die gewünschte Dichte an Gaseinschlüssen aufweist.

Der Erfindung liegt daher die Aufgabe zugrunde, eine Vorrichtung bzw. ein Verfahren der eingangs genannten Art dahingehend weiterzuentwickeln, daß die Effektivität des Gaseintrags in die Schokoladenmasse erhöht wird und somit kürzere Verweilzeiten im Druckbehälter ermöglicht werden.

Diese Aufgabe wird vorrichtungtechnisch dadurch gelöst, daß der Druckbehälter die Form eines horizontalen Zylinders aufweist, entlang dessen Mittelachse sich die Rührmittel erstrecken, und der nur in einem verhältnismäßig geringen Grad mit Schokoladenmasse gefüllt ist, bzw. verfahrenstechnisch dadurch, daß die Rührbewegung in einem als horizontaler Zylinder ausgebildeten Druckbehälter, der in einem verhältnismäßig geringen Grad mit Schokoladenmasse gefüllt ist, durch Beaufschlagung mit quer zur Zylinderachse wirkenden Rührelementen erfolgt.

Die Erfindung zeichnet sich dadurch aus, daß einerseits die Kontaktfläche zwischen der Schokoladenmasse und dem Gas vergrößert wird und daß andererseits eine eventuell auftretende Verdrängung einmal umhüllter Gasvolumina durch den Staudruck, der durch das Gewicht der darüber liegenden Schokoladenmasse erzeugt wird, vermindert wird.

Bevorzugte Ausführungsformen der Erfindung sind in den Unteransprüchen dargestellt.

Die Neigung des Druckbehälters gegenüber der Horizontalen derart, daß in Transportrichtung der Masse eine Gefällstrecke gebildet wird, hat zur Folge, daß einerseits der Vorgang der Schokoladenförderung im Druckbehälter begünstigt und andererseits das zum Verfahrensablauf notwendige Mindestniveau der Schokoladenmasse verringert wird.

Eine weitere bevorzugte Ausführungsform sieht vor, daß Druckbehälter und die Masseleitungen von getrennten Temperierkreisläufen versorgt werden. Während das Masseleitungssystem entsprechend der benötigten Schokoladentemperatur temperiert wird, hat sich gezeigt, daß die Wandung des Druckbehälters unter Umständen einer Kühlung bedarf, um die durch die Rührbewegung erzeugte Wärme abzuführen, die Schokoladenmasse im Inneren des Druckbehälters vor Überhitzung zu schützen und deren Temperatur auf dem gewünschten Wert zu halten.

Die Erfindung wird im folgenden anhand einer Zeichnung näher erläutert.

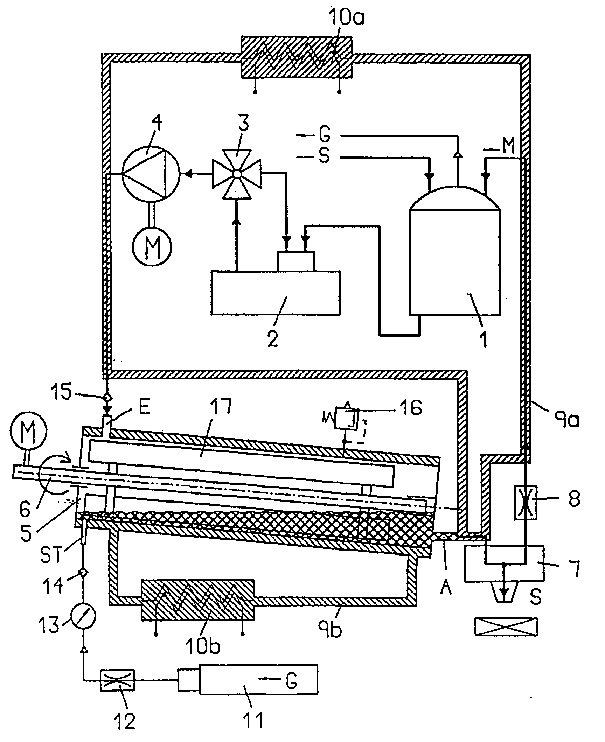

Die Zeichnung zeigt den Verfahrensablauf zur Aufbereitung von Schokoladenmasse mit durch die Masse umhüllten Gasteilchen gemäß einem Ausführungsbeispiel der Erfindung.

In einem Vorwärmkessel 1 wird über einen Massezufluß M eingebrachte Schokoladenmasse auf die gewünschte Vorwärmtemperatur gebracht und anschließend einem Temperiergerät 2 zugeführt. Ist das Mehrwegventil 3 zum Abzug von Schokoladenmasse aus dem Temperiergerät 2 geöffnet, wird die Schokoladenmasse mittels der Massepumpe 4 über eine temperierte Zuleitung in den Druckbehälter 5 gepumpt, wobei ein Rückschlagventil 15 den Rücktransport von Masse und Gas durch den im Behälter herrschenden Druck verhindert. Die temperierte Zuleitung ist Bestandteil einer Temperierleitung 9a, welche über einen ersten Wärmetauscher 10a auf die für die Schokoladenmasse geeignete Temperatur stabilisiert wird.

Der Druckbehälter 5 weist die Form eines horizontalen Zylinders auf, welcher zwischen seinem Einlaß E und seinem Auslaß A für die Schokoladenmasse derart geneigt ist, daß die im Inneren befindliche Schokoladenmasse eine Gefällstrecke durchläuft.

Der Druckbehälter 5 weist darüber hinaus einen Stutzen ST auf, an dem eine Gasversorgungsleitung angeschlossen ist. Dabei wird das Gas von einer Gasversorgungseinrichtung 11 zur Verfügung gestellt. Der Systemdruck im Inneren des Druckbehälters 5 wird über ein Drosselventil 12 eingestellt und mit Hilfe einer Druckmeßeinrichtung 13 gemessen. Aus Sicherheitsgründen ist der Druckbehälter mit einem Druckbegrenzungsventil 16 versehen, welches das Überschreiten eines bestimmten Grenzdrucks im Druckbehälter verhindert. Ein Rückschlagventil 14 gewährleistet die Freihaltung der Gaszuleitung von Schokoladenmasse.

Die Mantelfläche des Druckbehälters 5 ist über eine Temperierleitung 9b, die von einem weiteren Wärmetauscher 10b versorgt wird, temperiert, so daß die Temperatur der Schokolade im Inneren des Druckbehälters 5 konstant gehalten werden kann.

Im Inneren des Druckbehälters 5 ist ein motorisch angetriebenes Rührwerk 6 wirksam, dessen Rührwelle um die Zylinderachse des Druckbehälters 5 rotiert und welches paddelförmige Rührelemente 17 aufweist, die sich längs der Zylinderachse erstrecken. Diese Rührelemente sind derart gestaltet, daß sie die Vermengung des Gases mit der Schokolade unterstützen.

Wie in der Skizze veranschaulicht, ist der Druckbehälter 5 nur teilweise mit Schokoladenmasse gefüllt, derart, daß das Verhältnis aus Gasvolumen und Schokoladenmassevolumen wesentlich größer ist als bei der aus dem Stand der Technik bekannten Vorrichtung. Hierdurch wird die Kontaktoberfläche zwischen der Schokoladenmasse und dem Gas vergrößert, so daß ein sehr viel innigerer Mischprozeß erreicht wird, was zu einem effektiveren Gaseintrag in die Schokoladenmasse und damit zu wesentlich kürzeren notwendigen Verweilzeiten der Schokoladenmasse im Druckbehälter führt. Begünstigt wird dieser Prozeß dadurch, daß die Schokoladenmasse infolge der Gestaltung der Mischelemente des Rührwerks 6 vertikale Bewegungen ausführt.

Der Ausgang oder Abzug A des Druckbehälters 5 ist über eine Druckleitung mit einer Gießeinrichtung 7 verbunden, aus der die Schokoladenmasse S an die Umgebungsatmosphäre austritt. Hierbei dehnt sich das von der Schokolade umhüllte Gas unter dem verringerten Umgebungsdruck aus und bildet somit in der Schokolade die erwünschten Gasvolumina, die zu der porösen Eigenschaft der Luftschokolade führen. Dabei wird über ein Drosselventil 8 in der Rückführleitung der gleichmäßige Systemdruck am Ausgang des Druckbehälters 5 aufrechterhalten.

Nicht benötigte Schokoladenmasse wird in die Rückführleitung befördert, die ebenfalls von der Temperierleitung 9a temperiert wird.

Die Rückführleitung mündet im Vorwärmkessel 1, in welchem die rückgeführte Schokoladenmasse entgast wird und zur weiteren Verarbeitung zur Verfügung steht.

### Bezugszeichenliste

- 1: Entgasungs- und Vorwärmkessel
- 2: Temperiergerät
- 3: Vierwegeventil
- 4: Massepumpe
- 5: Druckbehälter
- 6: Rührwerk
- 7: Gießmaschine
- 8: Drosselventil - Masseleitung
- 9a: erste Temperierleitung
- 9b: zweite Temperierleitung
- 10a: erster Wärmetauscher
- 10b: zweiter Wärmetauscher
- 11: Gasversorgungseinheit
- 12: Drosselventil - Gasleitung
- 13: Druckmeßeinrichtung
- 14: Rückschlagventil - Gasleitung
- 15: Rückschlagventil - Masseleitung
- 16: Druckbegrenzungsventil
- 17: Rührpaddel

## Patentansprüche

1. Vorrichtung zur Aufbereitung von Schokoladenmasse mit in der Masse eingeschlossenen Gasvolumina bestehend aus einem Masseversorgungssystem (1, 2, 3, 4) zur Bereitstellung von temperierter Schokoladenmasse, einem gasbeaufschlagten Druckbehälter (5), welcher einen Einlaß (E) für die Masse, Mittel (6) zum Vermischen des Gases mit der Schokoladenmasse und einen dazu beabstandeten Auslaß (A) zum Abzug der mit Gas angereicherten Schokoladenmasse unter Gasdruck aufweist, und einer dem Druckbehälter (5) nachgeordneten Gießeinrichtung (7), **dadurch gekennzeichnet,** daß der Druckbehälter (5) die Form eines liegenden Zylinders aufweist, entlang dessen Mittelachse sich die Rührmittel (6) erstrecken und der nur in einem verhältnismäßig geringen Grad mit Schokoladenmasse gefüllt ist.

2. Vorrichtung nach Anspruch 1,
**dadurch gekennzeichnet**, daß der Druckbehälter (5) gegenüber der Horizontalen derart geneigt ist, daß in Förderrichtung der Masse eine Gefällstrecke gebildet ist.

3. Vorrichtung nach einem der vorhergehenden Ansprüche,
**dadurch gekennzeichnet**, daß Druckbehälter (5) und Masseversorgungssystem (1-4) von verschiedenen Temperierkreisläufen (9a, 9b, 10a, 10b) versorgt werden.

4. Vorrichtung nach einem der vorhergehenden Ansprüche,
**dadurch gekennzeichnet**, daß der Druckbehälter (5) ein Rührwerk mit sich entlang der Zylinderachse erstreckenden Rührpaddeln aufweist.

5. Verfahren zur Aufbereitung von Schokoladenmasse mit in der Masse eingeschlossenen Gasvolumina, bei dem temperierte Masse mit vorgegebenen Eigenschaften (Zusammensetzung, Viskosität, Temperiergrad) bereitgestellt, einem gasbeaufschlagten Druckbehälter zugefördert und in diesem einer Rührbewegung unterzogen wird, wobei die Gasteilchen von der Schokoladenmasse umhüllt werden, und bei dem anschließend die Gasvolumina in der Schokoladenmasse beim Gießvorgang unter Ausbildung einer porösen Struktur expandiert werden,
**dadurch gekennzeichnet**, **daß** die Rührbewegung in einem als horizontaler Zylinder ausgebildeten Druckbehälter durch Beaufschlagung mit quer zur Zylinderachse wirkenden Rührelementen erfolgt, wobei der Druckbehälter nur in einem verhältnismäßig geringen Grad mit Schokoladenmasse gefüllt ist.

6. Verfahren nach Anspruch 5,
**dadurch gekennzeichnet**, **daß** die Schokoladenmasse während des Rührprozesses den Druckbehälter entlang einer Gefällestrecke durchfließt.
